Europäisches Patentamt

European Patent Office

Office européen des brevets

(19)

(11) **EP 1 274 655 B1**

(12) **FASCICULE DE BREVET EUROPEEN**

(45) Date de publication et mention
de la délivrance du brevet:
**27.07.2005 Bulletin 2005/30**

(21) Numéro de dépôt: **01927985.0**

(22) Date de dépôt: **17.04.2001**

(51) Int Cl.$^7$: **C02F 9/00**

(86) Numéro de dépôt international:
**PCT/FR2001/001180**

(87) Numéro de publication internationale:
**WO 2001/081255 (01.11.2001 Gazette 2001/44)**

(54) **PROCEDE DE TRAITEMENT ET DE REVALORISATION D'EFFLUENTS CONTENANT DES SULFATES METALLIQUES METTANT EN OEUVRE UNE ETAPE D'ADDITION D'AMMONIAQUE**

BEHANDLUNG VON METALLSULFATE ENTHALTENDES ABWASSER DURCH EINEN AMMONIAKZUSATZSCHRITT

METHOD FOR TREATING AND UPGRADING EFFLUENTS CONTAINING METALLIC SULPHATES USING AN AMMONIA ADDITION STEP

(84) Etats contractants désignés:
**AT BE CH CY DE DK ES FI FR GB GR IE IT LI LU MC NL PT SE TR**

(30) Priorité: **21.04.2000 FR 0005209**
**31.05.2000 FR 0007072**

(43) Date de publication de la demande:
**15.01.2003 Bulletin 2003/03**

(73) Titulaire: **SARP INDUSTRIES**
**78520 Limay (FR)**

(72) Inventeurs:
• **HYVRARD, François**
**F-78510 Triel sur Seine (FR)**
• **MULLER, Pascal**
**F-57155 Marly (FR)**

(74) Mandataire: **Vidon, Patrice et al**
**Cabinet Vidon**
**16 B, rue Jouanet - B.P. 90333**
**Technopole Atalante**
**35703 Rennes Cedex 7 (FR)**

(56) Documents cités:
**US-A- 3 981 966**

EP 1 274 655 B1

**Description**

La présente invention concerne le domaine du traitement des effluents industriels.

Plus précisément, la présente invention concerne le traitement des effluents liquides contenant principalement des sulfates métalliques et pouvant également contenir de l'acide sulfurique ($H_2SO_4$).

De tels effluents doivent impérativement subir un traitement conduisant à un effluent épuré susceptible d'être rejeté dans le milieu naturel. Jusqu'ici le traitement visant à épurer de tels effluents chargés en sulfates métalliques consiste à ajouter à ceux-ci de l'hydroxyde de calcium $Ca(OH)_2$ afin d'obtenir une précipitation de sulfate de calcium $CaSO_4$, $2H_2O$, c'est-à-dire du gypse.

Ce type de procédé présente toutefois l'inconvénient majeur d'entraîner également la précipitation des métaux provenant des sulfates métalliques sous forme d'hydroxydes métalliques $Me_a(OH)_e$.

Ces composés, qui sont obtenus en mélange avec le gypse, posent deux problèmes pour la valorisation.

Tout d'abord, la teneur en métaux polluants dans le gypse rend la valorisation de ce dernier très difficile compte tenu des seuils de concentration en métaux très faibles imposés en entrée des filières de recyclage.

Ensuite, l'éventuelle coloration par les hydroxydes métalliques du gypse, blanc à l'état pur, compromet la valorisation du gypse pour lequel l'indice de blancheur est un facteur clé.

En d'autres termes, le gypse obtenu à l'issu de ce procédé ne peut être utilisé dans l'industrie et doit être stocké en décharge. De ce fait, la pollution ne fait qu'être déplacée de l'effluent liquide vers un résidu solide.

L'objectif de la présente invention est de présenter un procédé de traitement d'effluents industriels contenant des sulfates métalliques avec ou sans acide sulfurique, ne présentant pas les inconvénients du procédé de l'état de la technique décrit ci-dessus.

En particulier, un objectif de la présente invention est de décrire un tel procédé qui conduise à l'obtention de produits valorisables, c'est-à-dire pouvant être utilement mis en oeuvre ultérieurement dans l'industrie.

Corollairement, un objectif de la présente invention est de présenter un tel procédé qui permette de réduire de façon importante les quantités de résidus finaux devant être stockées en décharge.

Encore un autre objectif de l'invention est de proposer un tel procédé qui puisse être mis en oeuvre sans impliquer un surcoût important par rapport au procédé de l'art antérieur.

Ces différents procédés sont atteints grâce à l'invention qui concerne un procédé de traitement d'effluents contenant au moins un sulfate métallique, ledit procédé étant caractérisé en ce qu'il comprend les étapes consistant à :

- ajouter une solution d'ammoniac $NH_3$ audit effluent pour obtenir du sulfate ammoniacal $(NH_4)_2SO_4$ en solution et une précipitation d'oxy-hydroxydes métalliques $Me_a(OH)_e$ ; ajout d'ammoniaque permettant une basification de l'effluent vers des pH compris entre 7 et 9,5 ;
- séparer la phase métallique précipitée $Me_a(OH)_e$ lors de l'étape précédente du reste de l'effluent ;
- ajouter audit effluent de l'hydroxyde de calcium $Ca(OH)_2$ afin de faire précipiter les sulfates en solution sous forme de sulfate de calcium $CaSO_4$ hydraté; la quantité de $Ca(OH)_2$ ajoutée satisfaisant à la réaction storchiométrique de formation du sulfate de calcium ;
- séparer le sulfate de calcium $CaSO_4$ hydraté précipité lors de l'étape précédente du reste de l'effluent ; le résidu pouvant être lavé et soumis à une valorisation.

L'invention préconise donc de faire précipiter les métaux contenus dans les sulfates métalliques, en mettant en oeuvre une étape de neutralisation, puis à séparer les oxy-hydroxydes métalliques ainsi précipités du reste de l'effluent avant de procéder à la précipitation des sulfates sous forme de sulfate de calcium et à la séparation de ce sulfate de calcium du reste de l'effluent. L'ensemble de ces étapes est effectué sans apport de chaleur, avec des températures de réaction comprises entre 10°C et 50°C.

En procédant ainsi, le sulfate de calcium récupéré n'est pas pollué par des phases métalliques. Il présente ainsi une couleur blanche correspondante à sa couleur naturelle qui le rend valorisable dans différents types d'industrie, notamment dans l'industrie du ciment ou du plâtre.

Le procédé selon l'invention permet également d'obtenir des oxy-hydroxydes métalliques précipités qui peuvent eux aussi être valorisés, c'est-à-dire mis en oeuvre utilement dans l'industrie, notamment dans la sidérurgie.

La réaction chimique qui se produit lors de l'addition de l'ammoniac à l'effluent est la suivante :

$$Me_a(SO_4)_b + 2bNH_3 + dH_2O \rightarrow Me_a(OH)_e + 2bNH_4^+ + bSO_4^{2-}$$

Lors de l'addition de l'hydroxyde de calcium $Ca(OH)_2$, le composé $CaSO_4$ est partiellement précipité selon la réaction:

$$2NH_4^+ + SO_4^{2-} + Ca(OH)_2 \rightarrow CaSO_4,2H_2O + 2NH_3.$$

L'ammoniaque $NH_3$ formé lors de cette réaction subit, selon une variante préférentielle particulièrement intéressante de l'invention, un strippage ou une distillation permettant de l'écarter de l'effluent et d'épurer celui-ci de ce composé.

Selon une variante préférée entre tout de l'invention, l'ammoniaque $NH_3$ récupérée à l'issu de ce strippage ou de cette distillation est ensuite réacheminée en tête de procédé pour être utilisée dans l'étape ci-dessus mentionnée de précipitation des métaux sous forme d'oxy-hydroxydes métalliques $Me_a(OH)_e$.

Afin d'obtenir une meilleure efficacité du procédé, celui-ci présentera également préférentiellement une étape préliminaire visant à augmenter le pH de l'effluent afin qu'il présente un pH environ égal ou supérieur à 2. En effet, les effluents bruts contenant des sulfates métalliques peuvent aussi contenir un acide lui conférant un pH très acide inférieur à 2 susceptible de nuire à l'équilibre réactionnel. Une telle étape préliminaire de neutralisation pourra être effectuée de diverses façons connues de l'homme de l'art.

On notera que, de façon avantageuse, les étapes d'addition de composés azotés alcalins et de carbonate ou d'hydroxyde de calcium seront avantageusement effectuées sous agitation.

Par ailleurs, pour une meilleure mise en oeuvre du procédé, l'effluent devra présenter, en début de procédé, une concentration en métaux comprise entre 3 g/l et 120 g/l.

En conclusion, par rapport à l'art antérieur, le procédé selon l'invention permet d'obtenir deux sous produits valorisables à savoir le gypse blanc $CaSO_4, 2H_2O$ d'une part et $Me_a(OH)_e$ d'autre part pouvant être valorisés, au lieu d'un mélange non valorisable de ces deux composés.

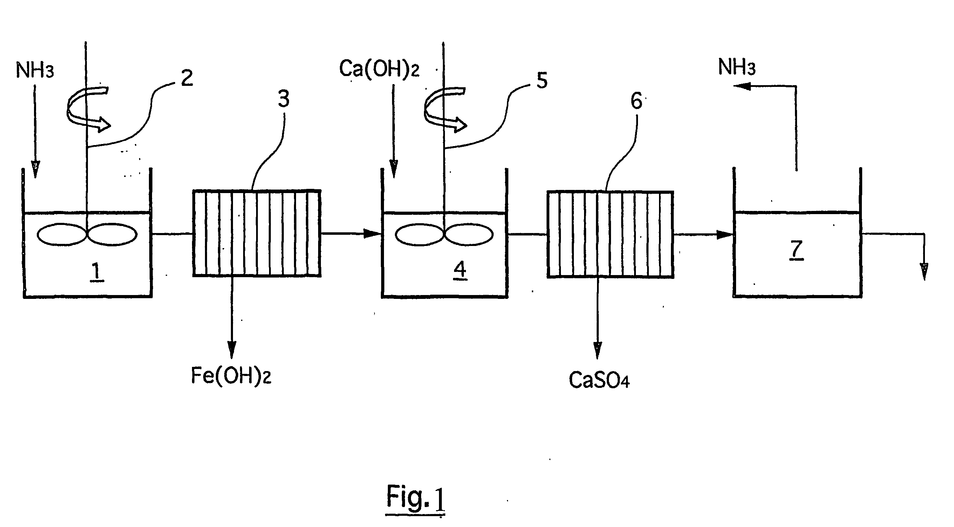

L'invention, ainsi que les différents avantages qu'elle présente seront plus facilement compris grâce à la description du mode de réalisation qui suit en référence à la figure unique.

Selon ce mode de réalisation, un effluent industriel présentant la composition suivante en métaux et un pH proche de 2,5 et une température de 20°C est introduit dans une cuve 1 :

| | | |
|---|---|---|
| Al : 360 mg/l | Fe : 7600 mg/l | Na : 300 mg/l |
| Zn : 15 mg/l | Mn : 590 mg/l | K: 70 mg/l |
| Ca : 500 mg/l | V : 79 mg/l | Mg : 450 mg/l |
| $SO_4$ : 20200 mg/l | Cr : 23 mg/l | Cd : 0,7 mg/l |
| Cu : 1,6 mg/l | Ni : 0,8 mg/l | Pb : 09 mg/l |

Par litre d'effluent à traiter on ajoute 25 ml d'ammoniaque ($NH_3$) à 16,6 mol/l, ce qui correspond à un rapport molaire $NH_3$/Fe proche de 3 et un pH de l'effluent voisin de 9,5.

Les réactions chimiques qui se produisent sont les suivantes :

$$Fe^{2+} + bSO_4^{2-} + 2NH_3 + 2H_2O \rightarrow Fe(OH)_2 + 2NH_4^+ + bSO_4^{2-}$$

$$Fe^{3+} + bSO_4^{2-} + 3NH_3 + 3H_2O \rightarrow Fe(OH)_3 + 3NH_4^+ + bSO_4^{2-}$$

Soit la réaction générale suivante :

$$Fe^{x+} + bSO_4^{2-} + cNH_3 + dH_2O \rightarrow Fe(OH)_x + cNH_4^+ + bSO_4^{2-}$$

Cette réaction conduit à la précipitation de l'oxy-hydroxyde de fer $Fe(OH)_x$, majoritairement.

Après 1/2 à 2 H d'agitation grâce à des moyens d'agitation 2, le mélange est filtré grâce à des moyens de filtration 3. L'analyse du filtrat (filtrat 1) et du résidu séché donne les résultats suivants :

| Composition du filtrat 1 : | | |
|---|---|---|
| Al : 0,5 mg/l | Fe : < 0,1 mg/l | Na : 248 mg/l |
| Zn : 1,2 mg/l | Mn : 1,0 mg/l | K : 65 mg/l |
| Ca : 450 mg/l | V : 0,3 mg/l | Mg : 300 mg/l |
| SO4 : 20100 mg/l | Cr : 0,06 mg/l | Cd : < 0,05 mg/l |

(suite)

| Composition du filtrat 1 : | | |
| --- | --- | --- |
| Cu : 0,5 mg/l | Ni : 0,6 mg/l | Pb : < 0,05 mg/l |

| Composition élémentaire du résidu métallique : | | |
| --- | --- | --- |
| Al : 11,4 g/kg de M.S. | Fe : 461 g/kg de M.S. | S : 22,0 g/kg de M.S. |
| Zn : 0,63 g/kg de M.S. | Mn : 24,0 g/kg de M.S. | K : 0,20 g/kg de M.S. |
| Ca : 3,0 g/kg de M.S. | V : 4,2 g/kg de M.S. | Mg : 2,2 g/kg de M.S. |
| Cu : 0,2 g/kg de M.S. | Cr : 1,3 g/kg de M.S. | |

Le filtrat 1 est ensuite transféré dans une cuve 4 dans laquelle, on ajoute de lait de chaux. Le mélange est ensuite agité pendant 1/2 H grâce à des moyens d'agitation 5 puis filtré grâce à des moyens de filtration 6 pour récupérer un filtrat (filtrat 2) et un précipité de gypse blanc (sulfate de calcium).

La réaction qui se produit est la suivante :

$$2NH_4^+ + SO_4^{2-} + Ca(OH)_2 \rightarrow CaSO_4,2H_2O + 2NH_3.$$

L'analyse du filtrat 2 et du gypse blanc donne les résultats suivants.

| Composition du filtrat 2 : | | |
| --- | --- | --- |
| Al : 0,4 mg/l | Fe : < 0,1 mg/l | Na : 180 mg/l |
| Zn: 0,5 mg/l | Mn : < 0,1 mg/l | K: 41 mg/l |
| Ca : 880 mg/l | V : < 0,1 mg/l | Mg : 0,1 mg/l |
| $SO_4$ : 1200 mg/l | Cr : 0,05 mg/l | Cd : < 0,05 mg/l |
| Cu : 0,15 mg/l | Ni : 0,2 mg/l | Pb : < 0,05 mg/l |

| Composition du gypse : | |
| --- | --- |
| Fe : 0,42 g/kg de M.S. | S : 174 g/kg de M.S. |
| Zn : 0,29 g/kg de M.S. | Al : 2,1 g/kg de M.S. |
| Ca : 232 g/kg de M.S.. | Mg : 18 g/kg de M.S. |

Le gypse obtenu est quasiment pur et ne présente que très peu de résidus métalliques. Il peut donc être aisément valorisé.

Le filtrat 2 subit ensuite un strippage ou une distillation dans un réacteur 7 pour récupérer l'ammoniaque qui est renvoyée en tête d'installation.

**Revendications**

1.   Procédé de traitement d'effluents contenant au moins un sulfate métallique , ledit procédé étant **caractérisé en ce qu'**il comprend les étapes consistant à :

-   ajouter une solution d'ammoniac $NH_3$ audit effluent pour obtenir du sulfate ammoniacal $(MH_4)_2SO_4$ en solution et une précipitation d'oxy-hydroxydes métalliques $Me_a(OH)_e$ ; ajout d'ammoniac permettant une basification de l'effuent vers des pH compris entre 7 et 9,5 ;
-   séparer la phase métallique précipitée $Me_a(OH)_e$ lors de l'étape précédente du reste de l'effluent ;
-   ajouter audit effluent de l'hydroxyde de calcium $Ca(OH)_2$ afin de faire précipiter les sulfates en solution sous forme de sulfate de calcium $CaSO_4$ hydraté; la quantité de $Ca(OH)_2$ ajoutée satisfaisant à la réaction stoechiométrique de la formation du sulfate de calcium ;
-   séparer le sulfate de calcium $CaSO_4$ hydraté précipité lors de l'étape précédente du reste de l'effluent ; le résidu pouvant être lavé et soumis à valorisation.

2. Procédé selon la revendication 1 **caractérisé en ce qu'**il comprend une étape supplémentaire de strippage ou de distillation de l'ammoniac NH$_3$ formée lors de l'étape de précipitation des sulfates.

3. Procédé selon la revendication 2 **caractérisé en ce qu'**il consiste à réacheminer l'ammoniaque issue de ladite étape de strippage ou de distillation vers ladite étape conduisant à la précipitation d'oxy-hydroxydes métalliques Me$_a$(OH)$_e$.

4. Procédé selon l'une quelconque des revendications 1 à 3 **caractérisé en ce qu'**il comprend une étape préliminaire de neutralisation de l'effluent pour qu'il présente un pH supérieur ou égal à 2.

5. Procédé selon l'une quelconque des revendications 1 à 4 **caractérisé en ce que** lesdites étapes d'addition d'ammoniac et d'addition de l'hydroxyde de calcium sont effectuées sous agitation, l'ensemble de ces étapes étant effectué sans apport de chaleur, avec des températures de réaction comprises de préférence entre 10°C et 50°C.

6. Procédé selon l'une quelconque des revendications 1 à 5 **caractérisé en ce que** ledit effluent présente, en début de procédé, une concentration en métal comprise entre 3 et 120 g/l.

7. Procédé selon l'une des revendication 1 à 6 **caractérisé en ce que** ledit effluent contient des sulfates métalliques.

**Patentansprüche**

1. Verfahren zur Behandlung von Abwässern, die zumindest ein Metallsulfat enthalten, wobei das Verfahren **dadurch gekennzeichnet ist, dass** es folgende Schritte umfasst:

   - Zugeben einer Ammoniaklösung NH$_3$ zum Abwasser zum Erhalten von Ammoniumsulfat (NH$_4$)$_2$SO$_4$ in Lösung und eines Metall-Oxy-Hydroxid-Niederschlags Me$_a$(OH)$_e$; der Zusatz von Ammoniak ermöglicht ein Basischmachen des Abwassers auf einen pH zwischen 7 und 9,5;
   - Abtrennen der Metallphase Me$_a$(OH)$_e$, die während des vorausgegangenen Schrittes aus dem übrigen Abwasser präzipitiert wurde;
   - Zugeben von Calciumhydroxid Ca(OH)$_2$ zu dem Abwasser, um die Sulfate in der Lösung ausfallen zu lassen in der Form von hydratisiertem Calciumsulfat CaSO$_4$; die zugegebene Menge an Ca(OH)$_2$ reicht aus für eine stöchiometrische Reaktion zur Bildung von Calciumsulfat;
   - Abtrennen des hydratisierten Calciumsulfats CaSO$_4$, das während des vorausgegangenen Schritts aus dem Rest des Abwassers präzipitiert wurde; das Residuum kann gewaschen und einer Aufwertung unterzogen werden.

2. Verfahren nach Anspruch 1, **dadurch gekennzeichnet, dass** es einen zusätzlichen Schritt umfasst des Strippens oder Destillierens des Ammoniaks NH$_3$, der während des Schritts der Sulfat-Präzipitation gebildet wird.

3. Verfahren nach Anspruch 2, **gekennzeichnet dadurch, dass** es besteht aus dem Umleiten des Ammoniaks, der beim Schritt des Strippens oder Destillierens hervorgegangen ist, zu dem Schritt, der zum Präzipitieren von Metall-Oxy-Hydroxid Me$_a$(OH)$_e$ führt.

4. Verfahren nach einem der Ansprüche 1 bis 3, **dadurch gekennzeichnet, dass** es einen Schritt des vorläufigen Neutralisierens des Abwassers umfasst, um es auf einen pH von größer oder gleich 2 zu bringen.

5. Verfahren nach einem der Ansprüche 1 bis 4, **dadurch gekennzeichnet, dass** die Schritte des Zugebens von Ammoniak und des Zugebens von Calciumhydroxid unter Rühren durchgeführt werden, alle Schritte werden durchgeführt ohne Zufuhr von Wärme, wobei die Reaktionstemperaturen vorzugsweise zwischen 10°C und 50°C betragen.

6. Verfahren nach einem der Ansprüche 1 bis 5, **dadurch gekennzeichnet, dass** die Konzentration eines Metalls im Abwasser zu Beginn des Verfahrens zwischen 3 und 120g pro Liter beträgt.

7. Verfahren nach einem der Ansprüche 1 bis 6, **dadurch gekennzeichnet, dass** das Abwasser Metallsulfate enthält.

**Claims**

1.  Method for treating effluents containing at least one metallic sulfate, the said method being **characterized in that** it comprises steps consisting of :

    - adding a solution of ammonia $NH_3$ to the said effluent so as to obtain ammonium sulfate $(NH_4)_2SO_4$ solution and a precipitate of metallic oxy-hydroxides $Me_a(OH)_e$; adding ammonia to make the effluent basic at pHs between 7 and 9.5;
    - separating the metallic phase $Me_a(OH)_e$, precipitated during the preceding step, from the rest of the effluent;
    - adding calcium hydroxide $(Ca(OH)_2$ to the said effluent so as to precipitate dissolved sulfates in the form of hydrated calcium sulfate $CaSO_4$; the quantity of $Ca(OH)_2$ added satisfying the stoichiometric reaction for the formation of calcium sulfate;
    - separating the hydrated calcium sulfate $CaSO_4$, precipitated during the preceding step, from the rest of the effluent; it being possible for the residue to be washed and submitted for exploitation.

2.  Method according to claim 1, **characterized in that** it includes a supplementary step of stripping or distilling the ammonia $NH_3$ formed during the step of precipitating sulfates.

3.  Method according to claim 2, **characterized in that** it consists of re-routing the ammonia coming from the said stripping or distilling step to the said step leading to the precipitation of metallic oxy-hydroxides $Me_a(OH)_e$.

4.  Method according to any one of claims 1 to 3, **characterized in that** it includes a preliminary step of neutralizing the effluent so that it has a pH above or equal to 2.

5.  Method according to any one of claims 1 to 4, **characterized in that** the said steps of adding ammonia and calcium hydroxide are carried out with stirring, all these steps being carried out without providing heat, with reaction temperatures preferably between 10°C and 50°C.

6.  Method according to any one of claims 1 to 5, **characterized in that** the said effluent has, at the start of the method, a concentration of metal of between 3 and 120 g/l.

7.  Method according to claims 1 to 6, **characterized in that** the said effluent contains metallic sulfates.

EP 1 274 655 B1

NH3

2

3

Ca(OH)2

5

6

NH3

Fe(OH)2

CaSO4

1

4

7

Fig.1